# EUROPÄISCHE PATENTANMELDUNG

(11) **EP 2 428 414 A2**
(43) Veröffentlichungstag der Anmeldung: **14.03.2012**
(21) Anmeldenummer: 11176317.3
(22) Anmeldetag: 02.08.2011
(51) Int. Cl.: B60S 1/16, B60S 1/20, B60S 1/58

(54) **Scheibenwischvorrichtung**

(30) Priorität: 08.09.2010 DE 102010040406
(71) Anmelder: Robert Bosch GmbH, 70442 Stuttgart (DE)
(72) Erfinder: Daeumer, Eyk, 76133 Karlsruhe (DE)

(57) **Zusammenfassung**

Die vorliegende Erfindung betrifft eine Scheibenwischvorrichtung (1), insbesondere für einen Heckscheibenwischer eines Kraftfahrzeuges, mit einem Wischermotor (2), der über eine in einem Getriebegehäuse (3) aufgenommene Getriebeanordnung eine einen Wischerhebel betätigende Abtriebswelle (4) antreibt, wobei die Getriebeanordnung zur Übertragung einer rotatorischen Bewegung des Wischermotors (2) in eine oszillierende Drehbewegung der Abtriebswelle (4) ein Umsetzgetriebe (5, 25) aufweist, welches eine Schubstange (6, 26) und ein mit der Schubstange (6, 26) gelenkig verbundenes Zahnsegment (9, 27) umfasst, welches mit einem drehfest mit der Abtriebswelle (4) verbundenen Ritzel (11) kämmt, wobei das Zahnsegment (9, 27) und die Schubstange (6, 26) an ihren einander zugewandten Randbereichen zur Bildung einer formschlüssigen lösbaren, drehgelenkigen Verbindung ineinandergreifende Koppelteile (28, 29) aufweisen.

## Beschreibung

### Stand der Technik

Die vorliegende Erfindung betrifft eine Scheibenwischvorrichtung, insbesondere für einen Heckscheibenwischer eines Kraftfahrzeuges, mit einem Wischermotor, der über eine in einem Getriebegehäuse aufgenommene Getriebeanordnung eine einen Wischhebel betätigende Abtriebswelle antreibt, wobei die Getriebeanordnung zur Übertragung einer rotatorischen Bewegung des Wischermotors in eine oszillierende Drehbewegung der Abtriebswelle ein Umsetzgetriebe aufweist, welches eine Schubstange und ein mit der Schubstange gelenkig verbundenes Zahnsegment umfasst, welches mit einem mit der Abtriebswelle verbundenen Ritzel kämmt.

Derartige Scheibenwischvorrichtungen sind allgemein bekannt und weisen üblicherweise einen Wischermotor auf, der über eine in einem Getriebegehäuse aufgenommene Getriebeanordnung eine Abtriebswelle antreibt, um einen Wischhebel auf der Windschutzscheibe des Kraftfahrzeuges zu bewegen. Die Getriebeanordnung weist zur Übertragung der rotatorischen Bewegung des Wischermotors in eine oszillierende Drehbewegung der Abtriebswelle ein Umsetzgetriebe auf. Das Umsetzgetriebe umfasst eine Schubstange sowie ein über ein Befestigungsbolzen gelenkig mit der Schubstange verbundenen Steg. Der Steg ist beabstandet von der Rotationsachse der Abtriebswelle über einen lösbaren Gelenkbolzen ortsfest in dem Getriebegehäuse drehbar gelagert und über die Schubstange gelenkig mit ebenfalls über einen Bolzen mit einem Schneckenrad verbunden. An dem Steg ist ein Zahnsegment vorgesehen, welches mit dem an der Abtriebswelle drehfest angebrachten Ritzel kämmt.

Das Umsetzgetriebe ist aus fertigungstechnischen Gründen zur Reduzierung des Plaztbedarfs sowie des Gewichts möglichst klein ausgeführt und die verschiedenen kraftübertragenen Bauteile Schubstange, Schneckenrad und Zahnsegment übereinander in verschiedenen Kraftübertragungsebenen angeordnet, was dazu führt, dass durch die während des Betriebes auftretenden und das Umsetzgetriebe einwirkenden großen Kräfte entsprechend große Querkräfte zwischen den übereinander angeordneten Bauteilen erzeugen, was zu hohem Verschleiß, zu einem Wirkungsgradverlust und im schlimmsten Fall zu Beschädigungen und Verformung bis hin zu einem Bruch der Bauteile führen kann.

Durch die kleine Ausführung und die Vielzahl der übereinander angeordneten Bauteile in dem Umsetzgetriebe entstehen des Weiteren große Getriebespieße, die an der Abtriebswelle und damit am Wischhebel auf der Windschutzscheibe sichtbar werden. Je größer das Getriebespiel im Neuzustand ist, desto höher ist die Zunahme des Getriebespiels über die Lebensdauer des Bauteils hinweg. Dies führt dazu, dass die anfangs nur sehr unterschwellig durch die zwar wahrgenommene unterschiedliche Bewegung des Wischerarms auf der Windschutzscheibe im Laufe der Lebensdauer des Bauteils immer deutlicher wahrnehmbar wird.

Es ist daher Aufgabe der vorliegenden Erfindung, eine Scheibenwischvorrichtung bereitzustellen, die eine gleichförmige Bewegung des Wischerarms auf der Windschutzscheibe, insbesondere der Heckscheibe ermöglicht und dabei gleichzeitig die Lebensdauer des Umsetzgetriebes erhöht.

### Offenbarung der Erfindung

Die Aufgabe wird erfindungsgemäß dadurch gelöst, dass das Zahnsegment und die Schubstange an ihren einander zugewandten Randbereichen zur Bildung einer formschlüssigen lösbaren drehgelenkigen Verbindung ineinandergreifende Koppelteile aufweisen.

Mit anderen Worten wird die Verbindung zwischen Schubstange und Zahnsegment so ausgebildet, dass es möglich wird, ein Spiel zwischen Schubstange und Zahnsegment möglichst gering zu halten. Diese drehgelenkige Verbindung führt zu einer Stabilisierung des Umsetzgetriebes, da im Stand der Technik auftretende Vertikalbewegungen des Steges beispielsweise aufgrund von Querkraft nunmehr vermindert werden können. Dies führt zu einer höheren Genauigkeit des Umsetzgetriebes und damit zu einer geringeren Steuung des Wischwinkels. Durch die damit verbundene Verringerung der Belastung der kraftübertragenen Bauteile der Scheibenwischvorrichtung wird eine Steigerung der Lebensdauer und eine Verringerung der Verzahnungsspiele erreicht, was wiederum zu einer geringeren Verschleißneigung und zu einer geringeren Toleranzempfindlichkeit des Umsetzgetriebes führt. Ferner wird durch die direkte Verbindung zwischen Schubstange und Zahnsegment ein direkter und damit stabilerer Bewegungsablauf erreicht, was einen symmetrischen und möglichen venusförmigen Bewegungsablauf sehr zuträglich ist.

Dieser Effekt wird dadurch gesteigert, dass der Kraftfluss zwischen dem an der Abtriebswelle drehfest angeordneten Ritzel, dem damit kämmenden Zahnsegment sowie der das Zahnsegment antreibenden Schubstange bei entsprechender Anordnung innerhalb eines Getriebegehäuses in einer Ebene erfolgt. Als Folge werden Querkräfte zwischen Ritzel, Zahnsegment und Schubstange vermindert bzw. komplett ausgeschaltet, was zu geringeren Reibungsverlusten und Querkräften zwischen den kraftübertragenden Bauteilen und damit zu einer Steigerung des Wirkungsgrades der Scheibenwischvorrichtung führt.

Eine Möglichkeit, eine erfindungsgemäße Verbindung zwischen der Schubstange und dem Zahnsegment bereitzustellen, wird dadurch erreicht, dass das Koppelteil des Zahnsegmentes durch eine im Wesentlichen kreisförmige Ausnehmung gebildet ist, in welche ein an der Schubstange komplementär ausgebildetes Koppelteil in der Form eines kreisförmigen oder kugelförmigen Vorsprungs zur Bildung der lösbaren drehgelenkigen Verbindung einsetzbar ist.

Alternativ ist es natürlich auch möglich, das Koppelteil des Zahnsegmentes als Vorsprung auszubilden, der eine kreisförmige Querschnittsfläche aufweist und zur Bildung einer lösbaren, drehgelenkigen Verbindung mit der Schubstange in ein komplementär ausgebildetes Koppelteil der Schubstange in Form einer kreisförmigen Ausnehmung einzusetzen.

Um zu gewährleisten, dass sich Zahnsegment und Schubstange in ausreichendem Maße relativ zueinander drehend bewegen können, weist das Zahnsegment in einem Ausführungsbeispiel der vorliegenden Erfindung im Bereich seines Koppelteils mindestens einen Freischnitt auf.

### Kurze Beschreibung der Zeichnungen

Eine weitere vorteilhafte Ausgestaltung der vorliegenden Erfindung ist den Unteransprüchen sowie der im Folgenden näher beschriebenen Zeichnung zu entnehmen. Darin zeigt
- Figur 1: eine perspektivische Teildarstellung einer Scheibenwischvorrichtung gemäß dem Stand der Technik;
- Figur 2: eine Teildarstellung des Umsetzgetriebes gemäß dem Stand der Technik,
- Figur 3: eine Teildarstellung eines erfindungsgemäßen Umsetzgetriebes von oben und im Schnitt; und
- Figur 4: eine alternative Ausführungsform eines erfindungsgemäßen Umsetzgetriebes von oben.

Ausführungsformen der Erfindung

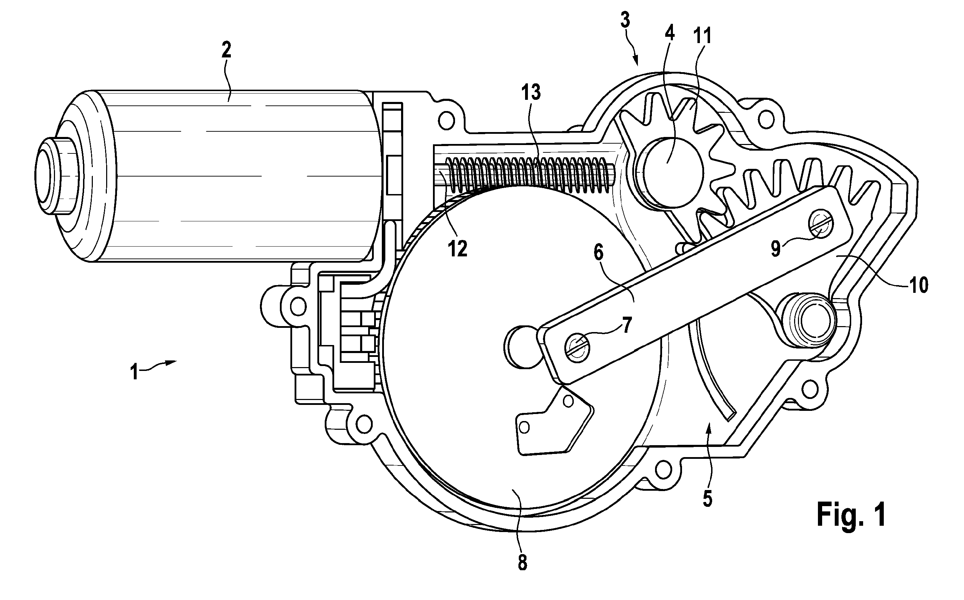

Die Figur 1 zeigt eine perspektivische Darstellung einer Scheibenwischvorrichtung 1 für einen Heckscheibenwischer eines Kraftfahrzeuges gemäß dem Stand der Technik.

Die Scheibenwischvorrichtung 1 weist einen Wischermotor 2 auf, der über eine in einem Getriebegehäuse 3 aufgenommene Getriebeanordnung eine Abtriebswelle 4 antreibt, über welche ein nicht dargestellter Wischhebel auf einer Windschutzscheibe des Kraftfahrzeuges hin und her bewegbar ist.

Die Getriebeanordnung weist zur Übertragung einer rotatorischen Bewegung des Wischermotors 2 in einer oszillierende Drehbewegung der Abtriebswelle 4 ein Umsetzgetriebe 5 auf. Das Umsetzgetriebe 5 weist eine Schubstange 6 sowie ein über einen Befestigungsbolzen 7 gelenkig mit der Schubstange 6 verbundenes Schneckenrad 8 auf. Die Schubstange 6 ist ferner über einen Befestigungsbolzen 9 mit einem Zahnsegment 10 drehgelenkig verbunden, welches wiederum mit einem drehfest an der Abtriebswelle 4 befestigten Ritzel 11 kämmt.

Um eine pendelnde Bewegung des nicht dargestellten Wischerarms zu erzeugen, treibt der Wischermotor 2 eine Ankerwelle 12 an, an der eine Schnecke 13 ausgebildet ist. Die Schnecke 13 kämmt wiederum in der Stirnverzahnung des Schneckenrades 8. Somit führt das Schneckenrad 8 eine kontinuierliche Rotationsbewegung aus, die durch eine bezogen auf die Rotationsachse des Schneckenrades 8 exzentrische Gelenkverbindung zwischen der Schubstange 6 und dem Schneckenrad 8 in eine Hub-Pendel-Bewegung der Schubstange 6 überführt wird. Die Hub-Pendel-Bewegung der Schubstange 6 wird über das mit dem Zahnsegment 10 kämmende Ritzel 11 in einer Pendeldrehung der mit dem Ritzel 11 drehfest verbundenen Abtriebswelle 4 überführt, woraus sich eine pendelnde Bewegung des nicht dargestellten Wischerhebels einstellt. So kann durch den Einsatz des Umsetzgetriebes 5 aus einer rein rotatorischen Bewegung eine pendelnde Drehbewegung der Abtriebswelle 4 um beispielsweise 180° erzeugt werden.

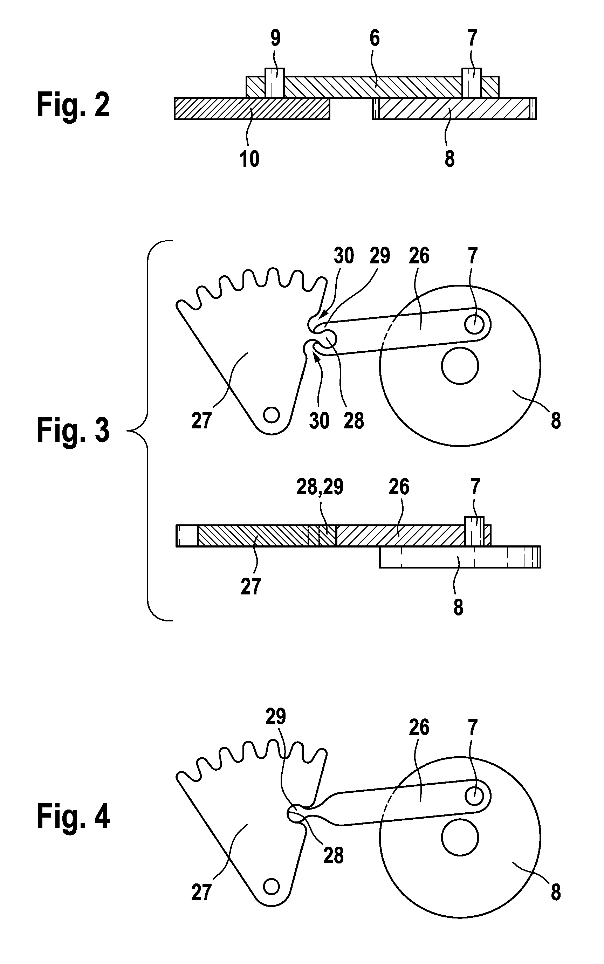

In Figur 2 ist deutlich zu sehen, dass das Schneckenrad in dem Umsetzgetriebe gemäß dem Stand der Technik in einer anderen Ebene liegt als die Schubstange 5, die wiederum bezogen auf die Schubstange 6 in einer anderen Kraftübertragungsebene liegt als das Zahnsegment 10 sowie das Ritzel 11. Dies ruft unweigerlich Querkräfte bei der Übertragung der Kraft von Schneckenrad 8 über die Schubstange 6 auf das Zahnsegment 10 und Ritzel 11 hervor.

Eine erfindungsgemäße Scheibenwischvorrichtung gemäß Figur 3 tritt diesen Effekt mit einem Umsetzgetriebe 25 mit folgendem Aufbau entgegen. Das Umsetzgetriebe 25 weist eine Schubstange 26 auf, welche mit einem Zahnsegment 27 drehgelenkig verbunden ist. Dazu weisen das Zahnsegment 27 und die Schubstange 26 an ihren einander zugewandten Randbereichen zur Bildung einer formschlüssigen, lösbaren, drehgelenkigen Verbindung ineinandergreifende Koppelteile 28, 29 auf. In dem in der Figur 3 gezeigten Ausführungsbeispiel ist das Koppelteil 28 des Zahnsegments 27 durch eine kreisförmige Ausnehmung gebildet, in welche ein an der Schubstange 26 komplementär ausgebildetes Koppelteil 29 in der Form eines kreisförmigen Vorsprungs zur Bildung der lösbaren drehgelenkigen Verbindung eingesetzt ist. Um zu gewährleisten, dass sich die Schubstange 26 ungehindert entsprechend einer Antriebsbewegung durch ein nicht dargestelltes Schneckenrad bewegen an dem Koppelteil 28 des Zahnsegments 27 kann, weist das Zahnsegment 27 im Bereich des Koppelteils 28 seitlich jeweils einen Freischnitt 30 auf.

Die Figur 4 zeigt eine alternative Ausbildungsmöglichkeit der erfindungsgemäß ineinandergreifenden Koppelteile 28, 29 zwischen dem Zahnsegment 27 und der Schubstange 26. Hier ist das Koppelteil 28 des Zahnsegmentes 27 als Vorsprung ausgebildet, das eine kreisförmige Querschnittsfläche aufweist und zur Bildung einer lösbaren, drehgelenkigen Verbindung mit der Schubstange 26 in ein komplementär ausgebildetes Koppelteil 29 der Schubstange 26 in Form einer kreisförmigen Ausnehmung eingreift.

## Patentansprüche

1. Scheibenwischvorrichtung (1), insbesondere für einen Heckscheibenwischer eines Kraftfahrzeuges, mit einem Wischermotor (2), der über eine in einem Getriebegehäuse (3) aufgenommene Getriebeanordnung eine einen Wischerhebel betätigende Abtriebswelle (4) antreibt, wobei die Getriebeanordnung zur Übertragung einer rotatorischen Bewegung des Wischermotors (2) in eine oszillierende Drehbewegung der Abtriebswelle (4) ein Umsetzgetriebe (5, 25) aufweist, welches eine Schubstange (6, 26) und ein mit der Schubstange (6, 26) gelenkig verbundenes Zahnsegment (9, 27) umfasst, welches mit einem drehfest mit der Abtriebswelle (4) verbundenen Ritzel (11) kämmt, **dadurch gekennzeichnet, dass** das Zahnsegment (9, 27) und die Schubstange (6, 26) an ihren einander zugewandten Randbereichen zur Bildung einer formschlüssigen lösbaren, drehgelenkigen Verbindung ineinandergreifende Koppelteile (28, 29) aufweisen.

2. Scheibenwischvorrichtung (1) nach Anspruch 1, **dadurch gekennzeichnet, dass** das Koppelteil (28) des Zahnsegmentes (27) durch eine kreisförmige Ausnehmung gebildet ist, in welche ein an der Schubstange (26) komplementär ausgebildetes Koppelteil (29) in der Form eines kreisförmigen Vorsprungs zur Bildung der lösbaren, drehgelenkigen Verbindung einsetzbar ist.

3. Scheibenwischvorrichtung (1) nach Anspruch 1, **dadurch gekennzeichnet, dass** das Koppelteil (28) des Zahnsegmentes (27) als Vorsprung ausgebildet ist, der eine kreisförmige Querschnittsfläche aufweist und zur Bildung einer lösbaren, drehgelenkigen Verbindung mit der Schubstange (26) in ein komplementär ausgebildetes Koppelteil (29) der Schubstange (26) in Form einer kreisförmigen Ausnehmung eingreift.

4. Scheibenwischvorrichtung (1) nach Anspruch 3, **dadurch gekennzeichnet, dass** das Zahnsegment (27) im Bereich des Koppelteils (28) mit mindestens einem Freischnitt (30) zur Gewährleistung einer Drehbewegung der Schubstange (26) an dem Koppelteil (28) des Zahnsegments (27) versehen ist.

5. Scheibenwischvorrichtung (1) nach einem der vorhergehenden Ansprüche, **dadurch gekennzeichnet, dass** die Schubstange (26) und das Zahnsegment (27) in einer gemeinsamen Ebene in dem Getriebegehäuse (3) angeordnet sind.
